# EUROPEAN PATENT SPECIFICATION

(11) **EP 0 668 119 B1**
(45) Date of publication and mention of the grant of the patent: **04.02.1998**
(21) Application number: 95107575.3
(22) Date of filing: 19.11.1992
(51) Int. Cl.: B23H 1/02, B23H 7/04

(54) **Method of controlling the operation of an electrical discharge machine**
Verfahren zur Betriebssteuerung einer Funkenerosionsmaschine
Procédé pour contrôler le fonctionnement d'une machine d'usinage par électroérosion

(30) Priority: 02.12.1991 JP 317828/91; 08.10.1992 JP 270297/92
(43) Date of publication of application: 23.08.1995
(62) Divisional of application: 92119706.7
(73) Proprietor: MITSUBISHI DENKI KABUSHIKI KAISHA, Tokyo 100 (JP)
(72) Inventor: Magara, Takuzi, c/o Mitsubishi Denki K.K., Higashi-ku, Nagoya-shi, Aichi 461 (JP); Yamada, Hisasi, c/o Mitsubishi Denki K.K., Higashi-ku, Nagoya-shi, Aichi 461 (JP)
(74) Representative: Lehn, Werner, Dipl.-Ing.

(56) References cited:
- EP-A- 0 027 041
- PATENT ABSTRACTS OF JAPAN vol. 009 no. 311 (M-436) ,7 December 1985 & JP-A-60 146624 (HITACHI SEIKO KK) 2 August 1985,
- PATENT ABSTRACTS OF JAPAN vol. 012 no. 292 (M-729) ,10 August 1988 & JP-A-63 068317 (BROTHER IND LTD) 28 March 1988,
- PATENT ABSTRACTS OF JAPAN vol. 011 no. 135 (M-585) ,28 April 1987 & JP-A-61 274812 (FANUC LTD) 5 December 1986,
- PATENT ABSTRACTS OF JAPAN vol. 014 no. 081 (M-0935) ,15 February 1990 & JP-A-01 295716 (HODEN SEIMITSU KAKO KENKYUSHO LTD) 29 November 1989,

## Description

The present invention relates to a method of controlling an operation of an electrical discharge machine having an electrode opposed to a workpiece at a predetermined distance away therefrom and defining a gap, whereby an electrostatic capacity exists in the gap.

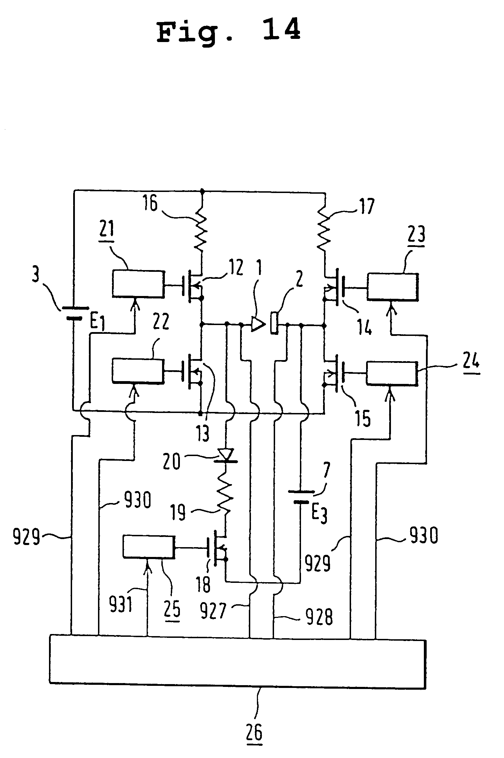

Fig. 14 shows a block diagram of a machining gap voltage application circuit to be used for a known control method for a known electrical discharge machine disclosed in JP-A 61-4620. This machining gap voltage control method generates a voltage applied to a machining gap between a workpiece and an electrode in an electrical discharge machine.

Referring to Fig. 14, the reference sign 1 indicates an electrode, 2 a workpiece, 3 a first direct-current power supply having an output voltage El, and 12 to 15 switching circuits, e.g., semiconductor switching devices.

A series connection of the semiconductor switching device 12 and a resistor 16 is connected between the anode of the first direct-current power supply 3 and the electrode 1, and a series connection of the semiconductor switching device 14 and a resistor 17 is connected between the anode of the first direct-current power supply 3 and the workpiece 2. The resistors 16 and 17 constitute a resistor circuit.

The semiconductor switching device 13 is connected between the cathode of the first direct-current power supply 3 and the electrode 1, and the semiconductor switching device 15 is connected between the cathode of the first direct-current power supply 3 and the workpiece 2.

A third direct-current power supply 7, whose output voltage is E3, forms a series connection with a semiconductor switching device 18, a resistor 19 and a diode 20, between the electrode 1 and the workpiece 2.

In this series connection, the diode 20 is installed in a direction in which a current flows from the electrode 1 to the workpiece 2.

Driving circuits 21 to 25 are operative to drive the semiconductor switching devices 12 to 15 and 18. A control circuit 26 provides a control signal to the driving circuits 21 to 25 for exercising the ON/OFF control of the semiconductor switching devices 12 to 15 and 18.

The output voltage E3 of the third direct-current power supply 7 is higher than the voltage El of the first direct-current power supply 3, and the resistance value of the resistor 19 is set to be sufficiently smaller than those of the resistors 16 and 17.

The voltage of the electrode 1 is transmitted to the control circuit 26 by a signal line 927, and the voltage between the workpiece 2 and the control circuit 26 is established by a signal line 928.

The control signal output of the control circuit 26 is transmitted to the driving circuits 21 and 24 via signal line 929 and the control signal output from the control circuit 26 to the driving circuits 22 and 23 is transmitted by line 930.

Finally, the control signal output of the control circuit 26 is transmitted to the driving circuit 25 via line 931.

The control method to be used in the machining gap voltage application circuit shown in Fig. 14 will now be described. In Fig. 14, the control circuit 26 exercises the control method to operate the semiconductor switching devices 12 and 15 ON/OFF simultaneously and turn the semiconductor switching devices 13 and 14 ON/OFF simultaneously. The control circuit 26 also carries out the control method to operate the semiconductor switching devices 12 and 13 ON/OFF on a complementary basis and operate the semiconductor switching devices 14 and 15 ON/OFF on a complementary basis.

When the semiconductor switching devices 13 and 14 are turned ON and an electrical discharge is started with a higher voltage imposed on the workpiece 2 than on the electrode 1, i.e. a positive voltage is applied to the machining gap, the semiconductor switching device 18 is turned ON to impose the voltage E3 of the third direct current power supply 7 between the workpiece 2 and the electrode 1, whereby a large discharge current flows between the workpiece 2 and the electrode 1. After a predetermined time has elapsed, the control circuit 26 exercises control to turn the semiconductor switching devices 13 and 14 OFF and also turn the semiconductor switching device 18 OFF.

The workpiece 2 is machined by the discharge in a state wherein the positive voltage is applied to the machining gap when the semiconductor switching devices 13 and 14 are ON. In a state wherein a higher voltage is imposed onto the electrode 1 than onto the workpiece 2, i.e. a negative voltage is applied to the machining gap, when the semiconductor switching devices 12 and 15 are ON, the offset of an average voltage applied between the workpiece 2 and the electrode 1 is corrected in a decreasing direction, thereby reducing electrolysis and electrolytic corrosion.

The operation of the conventional machining gap voltage application circuit shown in Fig. 14 and the control method related thereto will now be described with reference to an operation flowchart given in Fig. 15 and the machining gap voltage and current waveforms shown in Figs. 16(a) and 16(b).

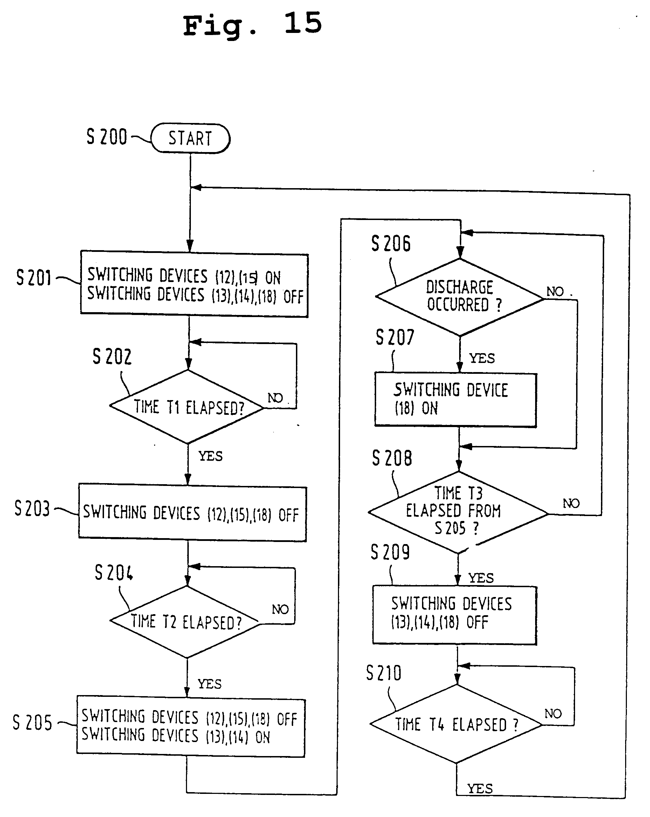

When an operation START command is given to the machining gap voltage application circuit, the processing shifts from step S200 to step S201 in Fig. 15.

In the step S201, the semiconductor switching devices 12 and 15 are turned ON and the semiconductor switching devices 13, 14 and 18 are turned OFF.

In this state, the anode voltage of the first direct current power supply 3 is imposed onto the electrode 1 via the semiconductor switching device 12 and the resistor 16, and the cathode voltage of the first direct-current power supply 3 is applied to the workpiece 2 via the semiconductor switching device 15.

The processing immediately shifts from the step S201 to step S202, where the state set in the step S201 is held for a period of time Tl. The processing then progresses to step S203.

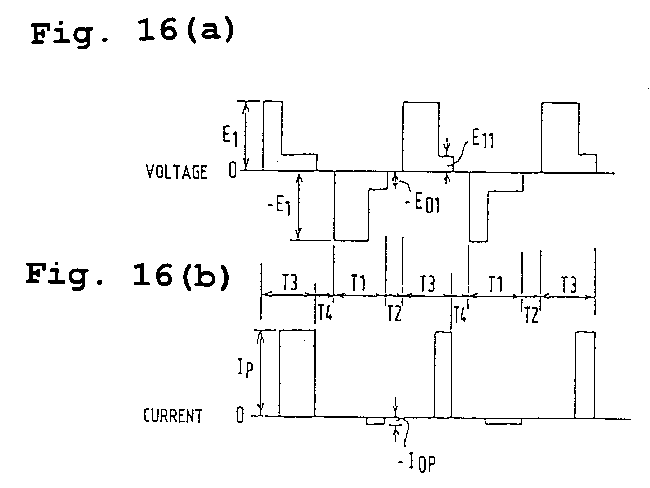

In the period of time Tl in the step S202, a voltage of - El is generated in the machining gap until an electrical discharge takes place, and when the discharge is initiated, a voltage of -E01 is developed, as shown in Figs. 16(a) and 16(b).

From a time when the discharge is initiated until period Tl ends, a negative current of -Iop flows in the machining gap as shown in Fig. 16(b). The absolute value of the voltage E01 is smaller than that of -El.

In the step S203, the semiconductor switching devices 12, 15 and 18 are turned OFF, whereby the voltage is not applied to the machining gap. The processing then advances to step S204 immediately.

In the step S204, the state set in the step S203 is held for a period of time T2 shown in Fig. 16(a), and the processing moves on to a next step S205.

In the step S205, the semiconductor switching devices 12, 15 and 18 remain OFF and the semiconductor switching devices 13 and 14 are turned ON.

In this state, the anode voltage of the first direct-current power supply 3 is imposed onto the workpiece 2 via the semiconductor switching device 14 and the resistor 17, and the cathode voltage of the first direct-current power supply 3 is applied to the electrode 1 via the semiconductor switching device 13.

The processing then shifts from the step S205 to step S206 immediately.

In the step S206, it is determined whether or not an electrical discharge has taken place. If the discharge has not yet occurred, the processing proceeds to step S208.

In the step S208, it is judged whether or not a period of time T3 has ended after the shift from the step S204 to the step S205 has been performed. If it has not yet ended, the processing returns to the step S206. If the discharge has already taken place in the step S206, the processing progresses to a next step S207.

In the step S207, the semiconductor switching device 18 is turned ON. When this switching device 18 is turned ON, the anode voltage of the third direct-current power supply 7 is imposed onto the workpiece 2 and the cathode voltage thereof onto the electrode 1 via the semiconductor switching device 18, the resistor 19 and the diode 20. Then, the processing immediately advances from the step S207 to the step S208.

If, in the step S208, it has been determined that the time T3 has not ended after the shift from the step S204 to the step S205, the processing returns to the step S206 as described above. If it has ended, the processing moves on to step S209.

In Figs. 16(a) and 16(b), the state in the steps S205 to S208 is indicated by the time T3, wherein the voltage of El is developed in the machining gap until the discharge is initiated, and a voltage of Ell is generated when the discharge is started.

From when the discharge is started until the time T3 ends, a positive current Ip flows in the machining gap as shown in Fig. 16(b).

The voltage of Ell is smaller than that of El, and the absolute value of -Iop is smaller than that of Ip.

The absolute value of -Iop is smaller than that of Ip because the resistance values of the resistors 19 and 17 are smaller than that of the resistor 16 as described above.

In the step S209, the semiconductor switching devices 5 13, 14 and 18 are turned OFF, whereby the voltage is not imposed to the machining gap. The processing then goes to step S210.

In the step S210, the state set in the step S209 is held for a period of time T4 shown in Figs. 16 (a) and 16(b). When this time has elapsed, the processing returns to the first step S201.

In the known machine shown in Fig. 14 and the control method related thereto the negative voltage, i.e. the voltage applied to render the voltage of the electrode 1 higher than that of the workpiece 2 is supplied by the direct-current power supply 3 which supplies the high positive voltage for starting the electrical discharge. Therefore, the negative voltage also becomes high and the discharge is also developed by the negative voltage.

The discharge due to this negative voltage is a small-energy discharge which is limited in current by the resistor 16 and continues for about several ten microseconds, posing almost no problem when the workpiece 2 is a ferrous material. In sintered materials such as carbide alloys, conductive ceramics and diamond-sintered materials, however, microcracks of approximately 10 microns in depth or width will occur, significantly degrading the machining quality of the machined surface.

The discharge resulting from the negative voltage continuing for about several ten microseconds will accelerate the consumption of the electrode 1 and cause the electrode material having melted from the electrode 1 to attach to the workpiece 2, reducing the machining quality of the machined surface.

Since the control method for the machining gap voltage application circuit of the known electrical discharge machine is executed as described above, the voltage of the power supply which imposes the negative voltage is high and the discharge current due to the negative voltage considerably degrades the machining quality of the machined surface of the workpiece 2.

Another conventional approach is disclosed in U.S. Patent No. 4,678,884. This patent teaches the use of an inverse voltage time adjustment circuit, which detects an average voltage applied between a wire electrode and a workpiece and outputs a pulse having a width corresponding to such average voltage, and an inverse voltage adjustment circuit which provides an output corresponding to the holding voltage of a sample hold circuit for detecting and holding a difference between a transistor-to-resistor voltage and a reference voltage at the application of an inverse voltage for a period of the output pulse time of the inverse voltage time adjustment circuit. In this conventional design, the output of the inverse voltage adjustment circuit causes the transistor to conduct and perform class A amplification operation, whereby the peak voltage of the inverse voltage is rendered constant and an average machining voltage is zeroed.

In the above referenced patent, the peak voltage of the inverse voltage is cut because great damage to the electrode must be avoided. However, since the design in the patent was not intended to prevent the discharge from occurring at the application of a negative voltage where possible, a discharge is generated at the application of a negative voltage as in the conventional approach shown in Fig. 14. When the discharge takes place, the machining gap voltage is reduced, and a large current starts to flow in the machining gap. As a result, a detrimental arc is liable to persist, and this design is found to have the same disadvantages as those of the conventional approach shown in Fig. 14.

In addition, since this conventional design causes the transistor to perform class A amplification operation, the transistor may generate heat if it attempts to exercise the output control of a high-power EDM power supply.

It is accordingly an object of the present invention to providing a control method for an electrical discharge machine that prevents the quality of the machined surface of a workpiece from being degraded by a negative-voltage electrical discharge, ensures high machining quality for the machined surface if the voltage of a power supply for applying a negative voltage to a machining gap is so high that a discharge may be generated, and leads to an improved machining speed.

According to the invention this object is achieved by a method of the kind outlined above comprising the steps of applying a first direct current voltage having a first polarity across the gap during a first period of time, applying a second direct current voltage, which has a second polarity, opposite to the polarity of the first voltage, across the gap during a second period of time; detecting the discharge of a second polarity current from the electrostatic capacity in the gap, and applying a first polarity current in the gap before the second polarity current is cut off, whereby the current flowing between the electrode and the workpiece during the second period of time is a predetermined value.

The inventive control method improves the machining speed sharply. Further, the inventive control method prevents a discharge from occurring at the application of a negative-polarity voltage or prevents the same from taking place where possible, and as a result, the machined surfaces of a workpiece can be prevented from being reduced in quality due to the discharge taking place in the negative-polarity voltage application state. The generation of arcs which affect machined surfaces at the time of positive-polarity or negative-polarity voltage application is prevented by applying an offset current to one generated from the capacitance at the gap.

In addition, the machine clamps the voltage between the electrode and the workpiece at a predetermined voltage in the negative-polarity voltage application state without the transistor performing class A amplification operation, whereby the transistor does not generate heat if the output control of a high-power electrical discharge machining power supply is carried out.

It is also apparent that invention achieves a control method where the voltage between said electrode and workpiece can be controlled to a predetermined voltage easily, e.g. zero.

The inventive control method also allows optimum machining conditions to be selected according to a material to be machined, prevents the generation of microcracks if a material machined is different, and ensures stable, high-level machining with a workpiece protected from electrolytic corrosion.

It is apparent that the control method is preferably used in an electrical discharge machine equipped with a machining gap voltage application circuit having switching circuits capable of switching between a first voltage application state wherein one terminal of a first direct-current power supply is connected to an electrode and the other terminal thereof connected to a workpiece and a second voltage application state wherein the one terminal is connected to the workpiece and the other terminal is connected to the electrode. Since such switching circuits cause a period of time when the second voltage application state and a second voltage application reset state alternate with each other, and a period of time when the first voltage application state lasts to be repeated in a predetermined sequence, the offset of an average voltage between the electrode and the workpiece occurring in the first voltage application state is reduced by the second voltage application state, thereby preventing the workpiece from being deformed by electrolysis or electrolytic corrosion and also keeping the machined surface quality of the workpiece from being worsened by an electrical discharge in the second voltage application state.

Also, the control of the voltage applied between the electrode and the workpiece in the second voltage application state is achieved by clamping this voltage to a predetermined value through a series connection of a second direct-current power supply and a rectifier circuit or a series connection of a constant-voltage circuit and the rectifier circuit. Therefore, the discharge occurring in the second voltage application state is can be prevented or weakened, ensuring the improvement in machined surface quality of the workpiece.

Further, the voltage applied between the electrode and the workpiece in the second voltage application state is controlled to a predetermined smaller value by a series connection of a resistor and a switching element which is turned ON/OFF at a predetermined duty factor, such series connection being made between the electrode and the workpiece. Therefore, the discharge taking place in the second voltage application state can be prevented or weakened, ensuring the improvement in machined surface quality of the workpiece.

A better understanding of the present invention can be derived from the following description when taken in conjunction with the accompanying drawing wherein:

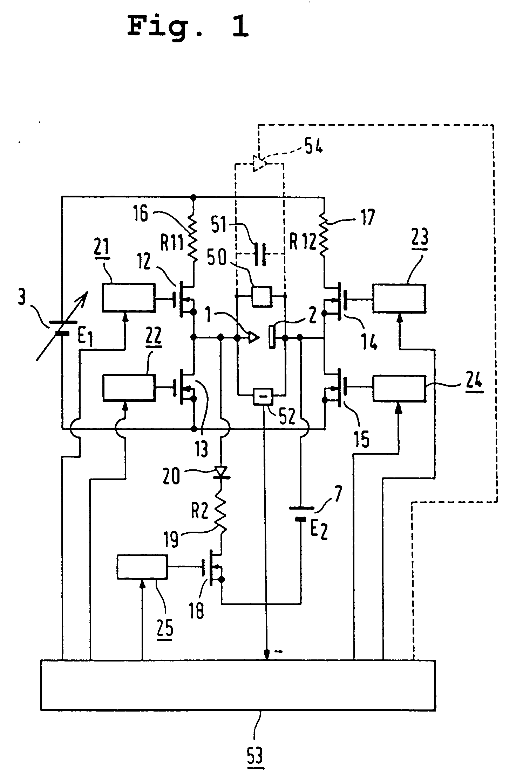

Fig. 1 is a block arrangement diagram of a gap voltage application circuit in an electrical discharge machine that is control by the control method according to the invention;

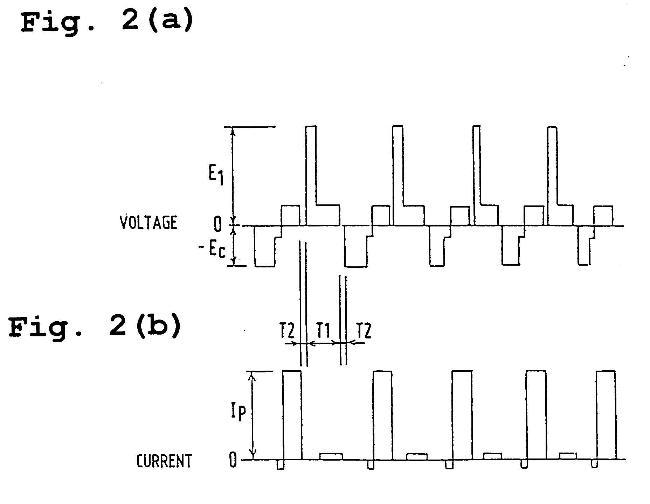

Figs. 2(a) and 2(b) are voltage/current waveform diagrams concerned with the control method according to the invention;

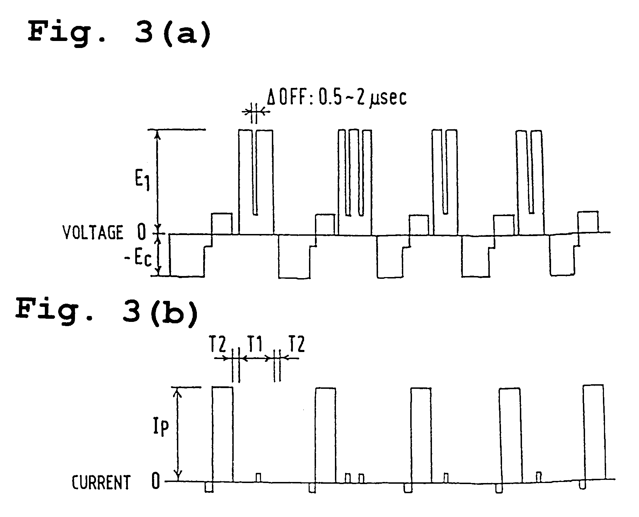

Figs. 3(a) and 3(b) are further voltage/current waveform diagrams concerned with the control method according to the invention;

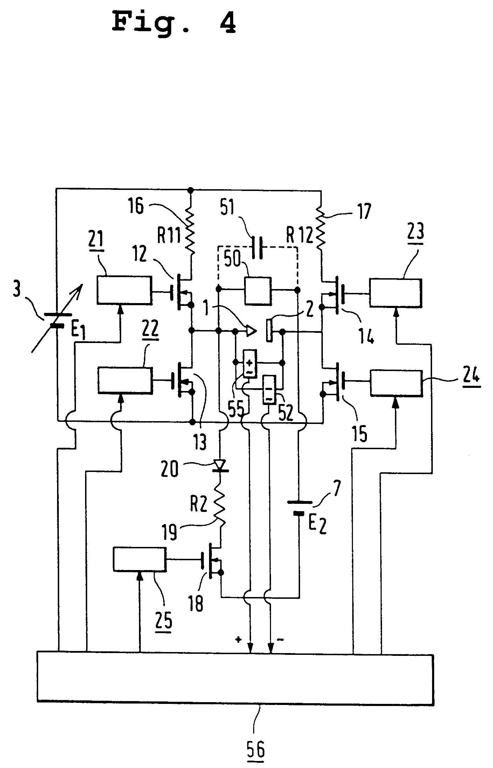

Fig. 4 is a second block diagram of a gap voltage application circuit in an electrical discharge machine that is controlled by the control method according to the invention;

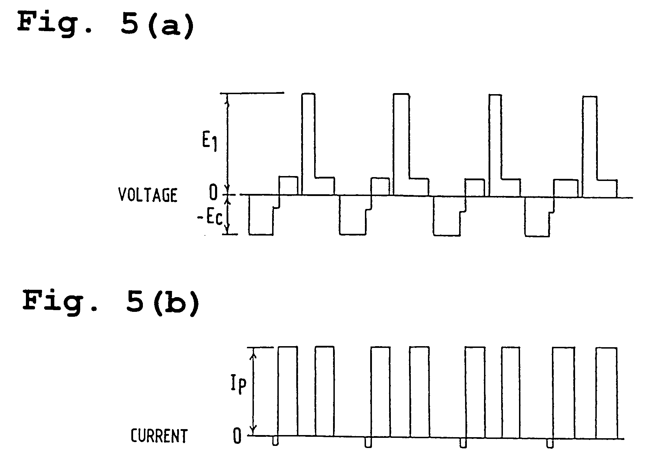

Figs. 5(a) and 5(b) are still further voltage/current waveform diagrams concerned with the control method according to the invention;

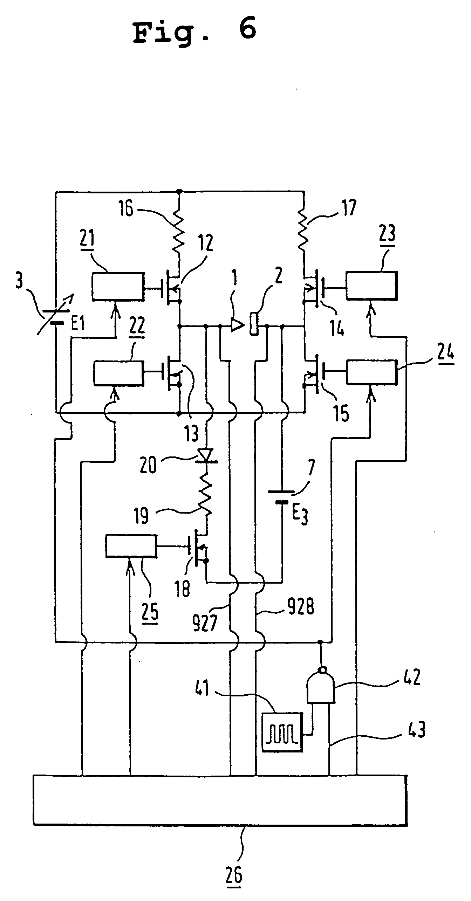

Fig. 6 is a block diagram of a machining gap voltage application circuit for the explanation of the machining gap voltage application circuit shown in Fig. 1;

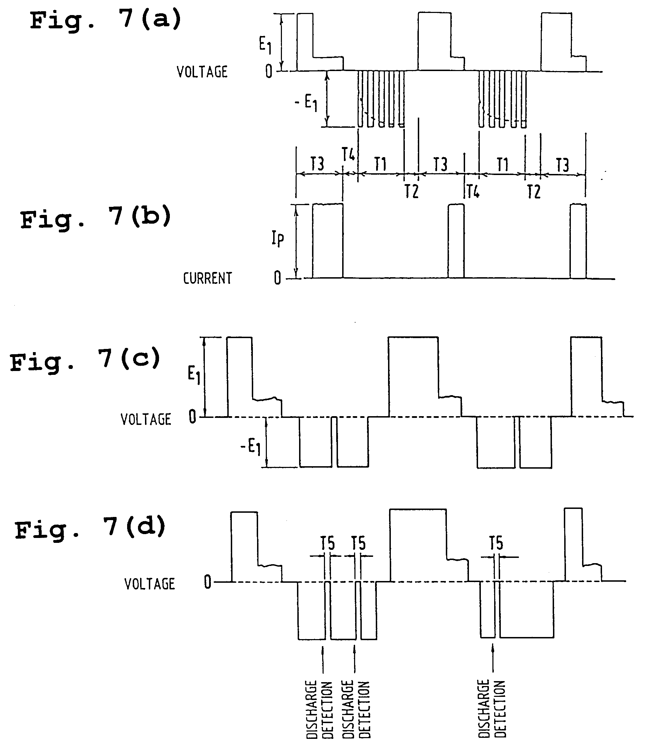

Figs. 7(a) - 7(d) are machining gap voltage and current waveform charts for the block diagram shown in Fig. 6;

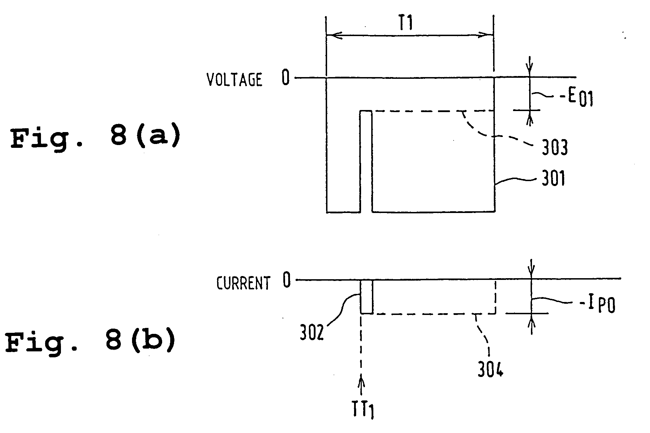

Figs. 8(a) and 8(b) illustrate voltage and current waveforms between an electrode;

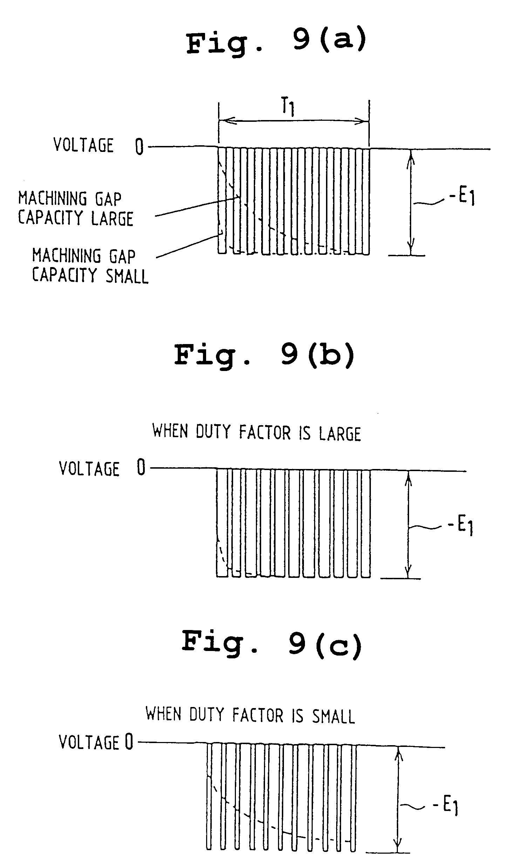

Figs. 9(a), 9(b) and 9(c) are waveform charts illustrating a relationship between a duty factor and a machining gap voltage;

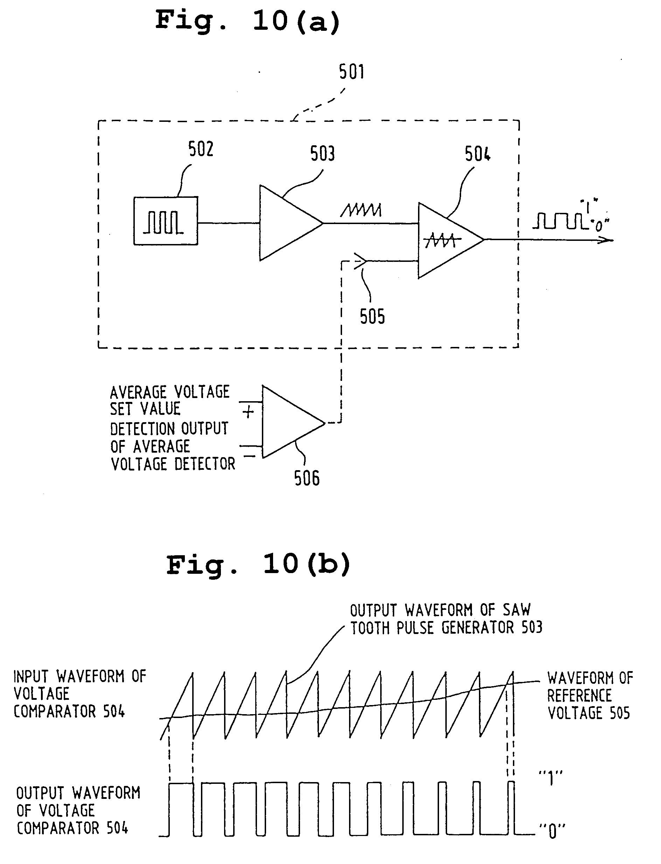

Fig. 10(a) illustrates a circuit for changing the duty factor in a machining gap voltage application circuit and Fig. 10(b) illustrates waveforms related thereto;

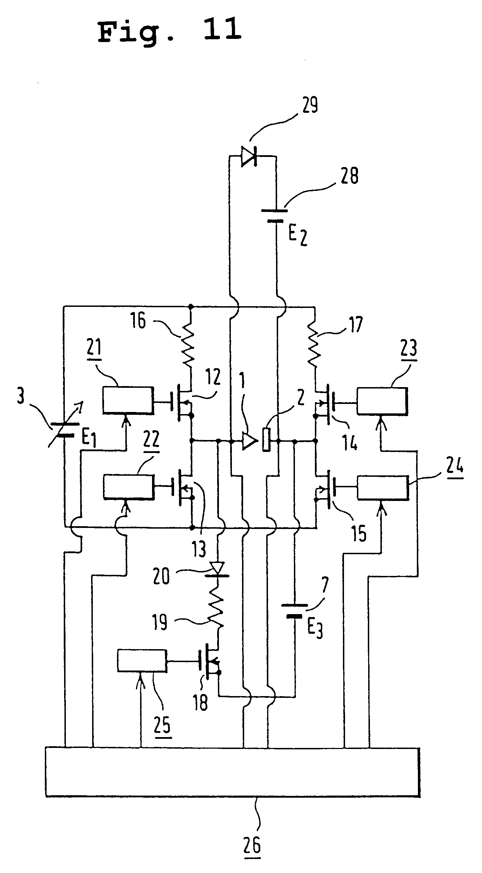

Fig. 11 is a further block diagram of a machining gap voltage application circuit in an electrical discharge machine for the explanation of the machining gap voltage application circuit shown in Fig. 1;

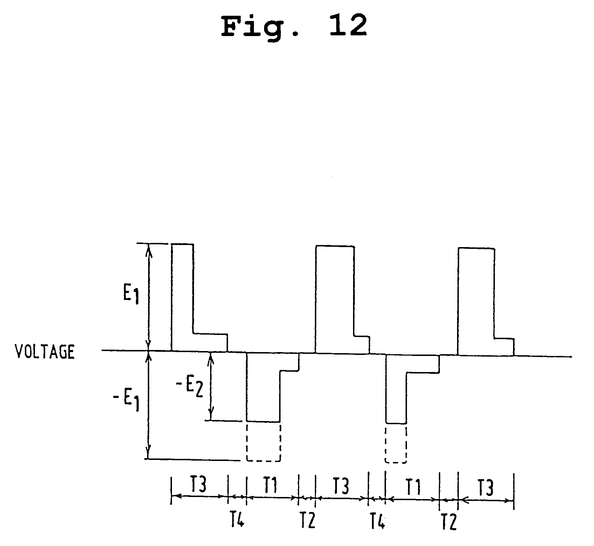

Fig. 12 is a machining gap voltage waveform chart in the block diagram shown in Fig. 11;

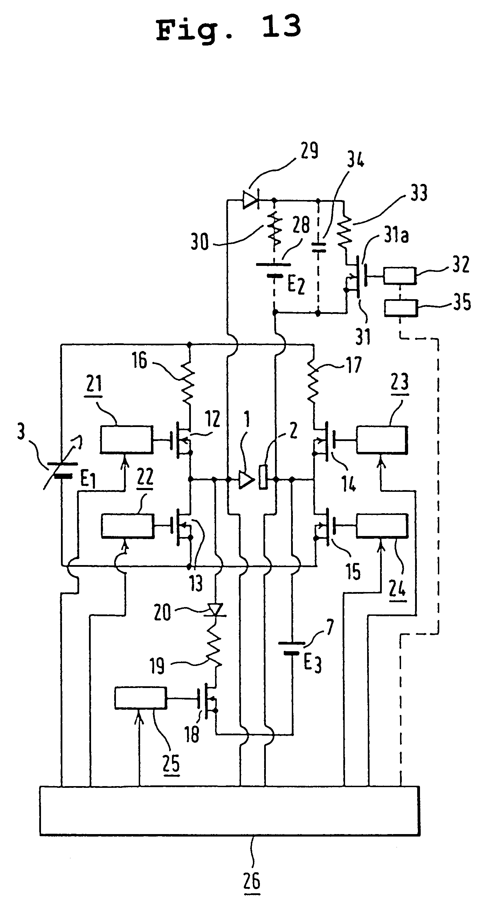

Fig. 13 is a still further block diagram of a machining gap voltage application circuit in an electrical discharge machine for the explanation of the machining gap voltage application circuit shown in Fig. 1;
Fig. 14 is a block diagram of a machining gap voltage application circuit in an electrical discharge machine known in the art;
Fig. 15 is an operation flowchart for the block diagram shown in Fig. 14;
Figs. 16(a) and 16(b) are machining gap voltage and current waveform charts in the arrangement block diagram shown in Fig. 14.

Fig. 6 is a block diagram of a machining gap voltage application circuit of an electrical discharge machine for the explanation of the machining gap voltage application circuit shown in Fig. 1 wherein the numerals 1 to 3, 7 and 12 to 26 indicate parts identical to those in Fig. 14 showing the conventional design and, therefore, will not be described here.

In Fig. 6 reference sign 41 indicates a high-frequency oscillation circuit, and 42 a two-input NAND circuit. The oscillation output of the high-frequency oscillation circuit 41 is connected to one input terminal of the two-input NAND circuit 42, and a control signal 43 output from a control circuit 26 is connected to the other input terminal thereof.

The control signal 43 is identical to the control signal 29 in Fig. 14. The output terminal of the two-input NAND circuit 42 is connected to driving circuits 21 and 24. The control circuit 26, the high-frequency oscillation circuit 41, the two-input NAND circuit 42 and the driving circuits 21 to 24 constitute a switching control circuit.

The operation of the machining gap voltage application circuit shown in Fig. 6 will now be described. During the operation of the machining gap voltage application circuit shown in Fig. 6, the semiconductor switching devices 12 and 15 are intermittently turned ON/OFF at the oscillation, frequency (normally 1 to 2 MHz) of the high-frequency oscillation circuit 41 in a period of time when a negative voltage is applied to the machining gap in the operation of the conventional machining gap voltage application circuit shown in Fig. 14, i.e. in a period of time Tl.

Figs. 7(a) and 7(b) show machining gap voltage and current waveforms, respectively, at a time when a discharge does not occur in the time Tl. As shown in Fig. 7(b), whereas a current of Ip identical in magnitude to that conventionally seen in Fig. 16(b) flows in time T3, no current flows in the time Tl.

In Fig. 7(a), a high-frequency pulse waveform represented by a continuous line in the time Tl indicates a waveform at a time when electrostatic capacity components do not exist in the machining gap, i.e. between the workpiece 2 and the electrode 1. The waveform represented by a dotted line gradually approaching a voltage of -El from zero volts in the period of time Tl indicates a waveform occurring when the electrostatic capacity components exist therein.

Figs. 8(a) and 8(b) show machining gap voltage and current waveforms in the time Tl, respectively, at a time when an electrical discharge has taken place in the time Tl.

In Figs. 8(a) and 8(b), a waveform 301 and a waveform 302 represented by continuous lines are a voltage waveform and a current waveform in the machining gap generated by the machining gap voltage application circuit shown in Fig. 6, respectively, at a time when an electrostatic capacity does not exist in the machining gap.

As indicated by the waveform 301, though the voltage rises to -E01 when an electrical discharge occurs at specific time of day TT1 in the time Tl, the semiconductor switching devices 12 and 15 are turned OFF in a short time (less than the oscillation period of the high-frequency oscillator 41).

At this time, a current of -Ipo flows at the time TT1 as shown in Fig. 8(b) but returns to zero in a short time as described in the aforementioned voltage waveform.

A waveform 303 and a waveform 304 represented by dotted lines in Figs. 8(a) and 8(b) are a voltage waveform and a current waveform in the machining gap generated by the conventional machining gap voltage application circuit shown in Fig. 14 and are shown for comparison with waveforms 301 and 302, respectively.

As indicated by the waveform 303, in the machining gap voltage application circuit shown in Fig. 14, once an electrical discharge is started at the time TT1, it continues until the time Tl ends, and the machining gap voltage remains high at -E01 while the discharge continues. Regarding the current waveform, as shown in Fig. 8(b), the current Ipo lasts until the time Tl ends.

According to the conventional machining gap voltage application circuit shown in Fig. 14, therefore, once a discharge is started with a negative voltage applied to the machining gap, it continues until the time Tl ends, substantially reducing the quality of the machined surface of the workpiece 2. By comparison, according to the machining gap voltage application circuit shown in Fig. 6, if a discharge is started, the discharge current returns to zero in a short time, thereby preventing the quality of the machined surface of the workpiece 2 from being degraded.

Here, also the case when electrostatic capacity components in the machining gap is considered, whereby the voltage waveform represented by the dotted line in Fig. 7(a) appears in the time Tl. While this voltage waveform slowly approaches -El from zero volts in the process of time if the electrostatic capacity in the machining gap is large, it rapidly approaches -El from zero volts if the capacity is small, as shown in Fig. 9(a).

As shown in Figs. 9(b) and 9(c), even when the electrostatic capacity is identical in the machining gap, the velocity of approaching the voltage of -El from the zero volt state varies depending on the magnitude of the duty factor of the oscillation output waveform of the high frequency oscillator 41.

Namely, when the duty factor is large (the period of time when the semiconductor switching devices 12 and 15 are ON is longer than the period of time when the same are OFF, the voltage of -El is reached rapidly. In reverse, when the duty factor is small, the voltage of -El is reached slowly.

Accordingly, whether the electrostatic capacity exists or does not exist in the machining gap, changing the duty factor allows the integrated value of the negative voltage imposed to the machining gap in the time Tl to be varied.

Hence, by setting the duty factor to render the integrated values of the positive and negative voltages applied to the machining gap equal on the average, i.e. to zero the average voltage, the deformation and magnetization of the workpiece 2 surface can be more perfectly prevented from occurring due to electrolysis or electrolytic corrosion.

It should be noted that according to the block diagram shown in Fig. 6, the switching device 12 is turned ON and OFF many times in response to the high frequency output of the oscillation circuit 41. However, as shown in Fig. 7(c), current may be cut off whenever appropriate during the time of negative voltage application. Further, as shown in Fig. 7(d), after discharge by the negative voltage is detected, the switching device 12 may be turned OFF for the predetermined period of time T5 after discharge and then turned ON again.

Figs. 10(a) and 10(b) illustrate an example of a method and apparatus for changing the duty factor.

In Fig. 10(a) reference sign 501 indicates a high-frequency oscillation circuit which is designed to change the duty factor. This high-frequency oscillation circuit 501 is used in place of the high-frequency oscillation circuit 41 in the machining gap voltage application circuit illustrated in Fig. 6.

Reference sign 502 indicates a system clock generator for generating a clock pulse of a predetermined frequency having a certain duty factor.

Reference sign 503 indicates a saw tooth pulse generator for receiving the clock pulse as an output signal of the system clock generator 502 and generating a saw tooth pulse of a frequency identical to that of said clock pulse.

Reference sign 504 indicates a voltage comparator for comparing the output signal of the saw tooth pulse generator 503 and the voltage of a reference voltage terminal 505. The voltage comparator 504 outputs a 1-signal if the magnitude of the output signal of the saw tooth pulse generator 503 is greater than the voltage of the reference voltage terminal 505, and outputs a 0-signal if it is smaller.

The 1-signal is represented by a predetermined positive voltage, and the 0-signal by zero volts or a voltage near zero volts.

The high-frequency oscillation circuit 501 allows the duty factor of the output waveform to be changed by varying the magnitude of the voltage of the reference voltage terminal 505. That is, by setting the voltage of the reference voltage terminal 505 to a higher value, a pulse whose 1-period is shorter than its 0-period is output from the output terminal of the voltage comparator 504, i.e. the output terminal of the high frequency oscillation circuit 501. In comparison, by setting the voltage of the reference voltage terminal 505 to a lower value, a pulse whose 1-period is longer than its 0-period is output from the output terminal of the voltage comparator 504, i.e. the output terminal of the high frequency oscillation circuit 501.

Fig. 10(b) shows the input and output waveforms of the voltage comparator 504 for comparison with each other.

By connecting to the reference voltage terminal 505 the amplification output of an amplifier circuit 506 which amplifies a difference between the detection output of a machining gap average voltage detector (not shown) and an average voltage set value, negative feedback is effected to allow the duty factor to be automatically changed so that the average voltage in the machining gap becomes the average voltage set value.

By setting the average voltage set value to zero volts at this time, the duty factor is automatically set so that the average voltage of the machining gap becomes zero volts.

The duty factor controlling means comprises the saw tooth pulse generator 503, the voltage comparator 504 and the amplifier circuit 506. The duty factor controlling means is not confined to analogue signal processing but may perform digital processing.

Fig. 11 is a block diagram showing a further machining gap voltage application circuit for the machining gap application circuit shown in Fig. 1.

Referring to Fig. 11 reference sign 28 indicates a second direct current power supply which outputs a voltage of E2 and reference sign 29 indicates a rectifier circuit whose cathode is connected to the anode of the second direct-current power supply 28, e.g., a diode. The absolute value of E2 is set to a smaller value than that of El. The anode of the diode 29 is connected to the electrode 1, and the cathode of the second direct-current power supply 28 is connected to the workpiece 2.

Fig. 11 is identical to Fig. 14 showing the conventional design, with the exception that the second direct-current power supply 28 and diode 29 have been added. The parts indicated by the numerals 1 to 3, 7 and 12 to 26 will not be described here because they are identical to those in Fig. 14.

The control of the machining gap voltage application circuit shown in Fig. 11 will now be described.

In the machining gap voltage application circuit shown in Fig. 11, a series connection of the second direct-current power supply 28 and the diode 29 has a clamping function that keeps the absolute value of the negative voltage applied to the machining gap from becoming larger than the output voltage E2 of the second direct-current power supply 28.

Namely, if the semiconductor switching elements 12 and 15 are turned ON, the negative voltage having an absolute value of El is not imposed onto the machining gap. The gap voltage is clamped to the voltage of E3, which is smaller than El.

The diode 29 functions to inhibit a current flowing from the anode of the second direct-current power supply 28 to the electrode 1.

Fig. 12 illustrates voltage waveforms in the machining gap. One waveform has a crest value in time Tl that is represented by a dotted line and has a magnitude of -El. This is a waveform representing voltage levels before the start of an electrical discharge in a state wherein the series connection of the second direct-current power supply 28 and the diode 29 is not connected between the electrode 1 and the workpiece 2, i.e. in an unclamped state.

A second waveform has a crest value in the time Tl that is represented by a continuous line and has a magnitude of - E2. This is a waveform representing voltage levels before the start of an electrical discharge in a clamped state.

Since the magnitude of the negative voltage applied to the machining gap is thus clamped to the voltage -E2, the discharge resulting from the negative voltage is reduced or inhibited, thereby preventing the machined surface of the workpiece 2 from being reduced in quality.

It will be recognized that the second direct-current power supply 28 an electrical discharge in a power supply 28 may also be a power supply for incoming current only or a zener constant-voltage circuit, e.g., a zener diode.

Therefore, the second direct-current power supply 28 can be made up at low costs.

In Fig. 12, a positive voltage is imposed onto the machining gap in time T3. In this time T3, before ore the discharge is started, the voltage at a magnitude of El is 20 applied to the machining gap. Whether the positive or negative , voltage is applied to the machining gap, its absolute value decreases as soon as the discharge is initiated.

Fig. 13 is a block diagram of a machining gap voltage application circuit illustrating a still further machining gap voltage application circuit.

The machining gap voltage application circuit shown in Fig. 13 is designed to allow the machining gap voltage to be varied in the machining gap voltage application circuit according to the machining gap voltage application circuit shown in Fig. 11.

In Fig. 13 reference sign 30 indicates a resistor, and the anode of the diode 29 is connected to the electrode 1 and the cathode of the diode 29 is connected to one end of the resistor 30. The other end of the resistor 30 is connected to the anode of a second direct-current power supply 28 and the cathode of the second direct-current power supply 28 is connected to a workpiece 2.

Reference sign 31 indicates a switching element, e.g., a semiconductor switching device. Reference sign 32 indicates switching driving means, e.g. a driving circuit, which outputs a control signal for driving ON/OFF the semiconductor switching device 31 to a control terminal 31a of the semiconductor switching device 31.

Reference sign 33 indicates a resistor and one end thereof connected to the cathode of the diode 29. The semiconductor 31 is connected between the other end of the resistor 33 and the workpiece 2. Reference sign 34 indicates a capacitor which is connected between the cathode of the diode 29 and the workpiece 2.

The numerals 1 to 3, 7 and 12 to 29 in Fig. 13 are identical to those shown in Fig. 14 and will therefore not described here.

The resistor 30 may be omitted if the internal resistance of the second direct-current power supply 28 is sufficiently large.

The control of the machining gap voltage application circuit shown in Fig. 13 will now be described.

The driving circuit 32 is designed to enter into the control terminal 31a of the semiconductor switching device 31 the control signal for turning ON/OFF the semiconductor switching device 31 at a period shorter than the time constant of a CR circuit comprising the stray capacity in the machining gap, the capacitor 34 and the resistor 33.

The machining gap voltage is allowed to be changed by varying the duty factor of the ON/OFF operation of the semiconductor switching device 31.

That is, by causing the average voltage of the machining gap to be zero volts or nearly zero volts by selecting and setting the duty factor, the deformation and magnetization of the workpiece 2 surface can be prevented from occurring due to electrolysis or electrolytic corrosion.

The capacitor 34 employed to prevent the fluctuation of the machining gap voltage may be omitted when the frequency of the ON/OFF operation of the semiconductor switching device 31 is large and the stray capacity of the machining gap is large.

The second direct-current power supply 28 connected in series with the resistor 30 is provided to impose the voltage E2 of the second direct-current power supply 28 onto the capacitor 34 when the semiconductor switching devices 31, 15 and 16 are OFF. This voltage E2 allows the voltage across the capacitor 34 to be prevented from rising due to a surge voltage and allows an inrush current for charging the capacitor 34 to be reduced.

Switching element duty factor controlling means 35 connected by a dotted line in Fig. 13 may be employed to automatically set the duty factor so that negative feedback control is carried out and the average voltage of the machining gap becomes an average voltage set value, as in Fig. 10(a), using the detection output of a machining gap average voltage detector (not shown). In this case, setting the average voltage set value to zero volts causes the machining gap average voltage to be zero volts.

The resistor 33 may be replaced by an inductor, in which case power consumption due to the heat generation of the resistor 33 can be prevented.

Each of the different machining gap voltage application circuits designed to offset the positive-polarity voltage and the negative-polarity voltage during machining. However, this results in an increase in negative-polarity voltage application time, a reduction in the frequency of the current pulses contributing to machining and a reduction in the pulses generated by the second direct current power supply 7. Consequently, the machining speed is limited.

The present invention is arranged to overcome this disadvantage. The present invention will now be described in accordance with Figs. 1 and 2.

In Fig. 1 reference sign 50 indicates a voltage clamp circuit for clamping the negative-polarity voltage supplied to the machining gap, which is identical to the voltage clamp circuit consisting of the third direct current power supply 28 and the diode 29 in the previously described third is embodiment of Fig. 11 and is schematically illustrated. Reference sign 51 denotes an electrostatic capacity floating in the machining gap, reference sign 52 represents a discharge detection circuit for detecting a negative-polarity discharge generated by the first direct current power supply 3, and reference sign 53 designates a control circuit which gives control signals to the drive circuits 21 to 25 to exercise the ON/OFF control of the semiconductor switching devices 12 to 15 and 18 as described later. Other parts are essentially identical to those in the previously described machining gap voltage application circuits and therefore will not described here.

The control method according to the invention will now be described. At the start of operation, among the semiconductor switching devices 12 to 15 bridge-connected with the electrode 1 and the workpiece 2 in between, the semiconductor switching devices 13, 14 on one of two diagonal lines are both switched ON and the semiconductor switching devices 12, 15 on the other diagonal line and the semiconductor switching device 18 connected to the second direct current power supply 7 are switched OFF. At this time, a +El voltage is applied to the machining gap as shown in Fig. 2(a); this voltage may be in the range of 140 V to 160 V in a practical operation. After this state has continued for the length of time Tl, all of the semiconductor switching devices 12 to 15, 18 are switched to an OFF condition to bring the operation to a stop.

After this stop state has elapsed for the period of time T2, the semiconductor switching devices 12, 15 are switched ON; however, the semiconductor switching device 18 remains OFF. At this time, a clamp voltage of -Ec Volts as determined by the clamp circuit 50 is applied to the machining gap; this voltage magnitude is in the range of 70 V to 80 V. Since El is approximately two times that of Ec but of shorter duration, the voltages can average 0 but the frequency can be higher. The discharge generated by the negative-polarity voltage is detected by the discharge detection circuit 52, which then transmits a detection signal to switch OFF the switching devices 12, 15. If the switching devices 12, 15 are switched OFF, negative direct current arc current persists for an extremely short period, i.e. approximately several ten to several hundred nanoseconds, until the electrostatic energy accumulated in the electrostatic capacity 51 of the machining gap is discharged.

By switching ON the switching device 18 before this current is cut off, positive-polarity large current flows in the machining gap, causing progress in machining. If the switching device 18 is switched ON after the negative direct current arc has been cut off, a high positive polarity voltage is produced in the machining gap, causing an open wire, etc. Clearly, it is important that the negative-polarity current and positive-polarity current should be supplied consecutively, and the length of time from when the switching devices 12, 15 are switched OFF to when the switching device 18 is switched ON must be approximately several ten nanoseconds. A predetermined period of time after the switching device 18 is switched ON, the switching device 18 is switched OFF to bring the operation to a stop. After time T2 has elapsed in this stop state, the above cycle is repeated to carry out machining.

Since resistance values Rll, R12 of the current limiting resistors 16, 17 are selected to be sufficiently larger than resistance value R2 of the resistor 19 as in the conventional design, the peak current value supplied from the second direct current power supply 7 when the semiconductor switching device 18 is switched ON is sufficiently higher than the peak current value supplied from the first direct current power supply 3 via the semiconductor switching devices 12 to 15 as shown in a current waveform of Fig. 2(b), and the current contributing to the actual electrical discharge machining is mostly supplied to the machining gap by the semiconductor switching device 18.

Also, positive- and negative-polarity voltage application times are preset so that the positive-polarity voltage and the negative-polarity voltage during machining are offset (the sum is zeroed on the average).

As is seen from the comparison between Figs. 2(a) and 2(b) and Figs. 16(a) and 16(b), the present invention allows the switching device 18 to be switched ON at higher frequency than in the conventional machining design wherein the zero average voltage is maintained, whereby a high current pulse can be supplied to the machining gap at high frequency and the machining speed can be improved greatly.

While positive-polarity voltage application time Tl was preset to offset the positive-polarity voltage and the negative-polarity voltage during machining according to the invention an average voltage detection means (indicated by the numeral 54 in Fig. 1) may be provided to detect the average voltage during machining in order to control positive-polarity voltage application time Tl so that the average voltage may be zeroed, thereby providing a more reliable electrolytic corrosion prevention effect.

Also, by providing discharge detection means 55 for detecting a discharge generated by the positive-polarity voltage as shown in Fig. 4, and by providing extremely short, irreducible minimum stop time required to shut off the direct current arc produced by the positive-polarity voltage when the discharge is generated by the positive-polarity voltage as shown in Figs. 3(a) and 3(b), the persistence of the direct current arc produced by the positive-polarity voltage can be prevented, ensuring more stable machining. The appropriate length of this extremely short stop time is 0.5 to 2 sec according to experiments, though it depends on the status of the machining gap and the type of the workpiece.

Conversely, discharge detection means 52 for detecting the discharge generated by the negative-polarity voltage may be used to shut off the direct current arc produced by the negative-polarity voltage in a similar manner when the discharge is generated by the negative-polarity voltage.

The present invention will now be described in accordance with Fig. 4.

In Fig. 4 reference sign 56 indicates a control circuit which provides control signals to the drive circuits 21 to 25 to carry out the ON/OFF control of the semiconductor switching devices 12 to 15, 18 as described later. Other parts are essentially identical to those previously described and will therefore not described here.

The corresponding control method will now be described, whereby this control method is capable of machining both a drive mode wherein positive-polarity large current is applied when a discharge occurs due to a positive-polarity voltage as in the conventional design (hereinafter referred to as the first mode) and a drive mode wherein positive-polarity large current is applied when a negative-polarity discharge occurs as in the design described with reference to Fig. 1(hereinafter referred to as the second mode).

Namely, in the first mode, the workpiece is machined in the operation as performed by the conventional design. First, the switching devices 13, 14 are switched ON to apply the positive-polarity voltage to the machining gap. After the discharge generated by the positive-polarity voltage has been detected by the discharge detection means 55, the switching device 18 is switched ON to supply the positive-polarity large current to the machining gap. Subsequently, after a stop-for predetermined time T2, the switching devices 12, 15 are switched ON to apply the negative-polarity voltage. This cycle is repeated to advance the machining. Though low in machining speed, this mode gives a machined surface less damage, such as cracks, and is especially suitable for the machining of sintered materials, e.g., carbide alloy and sintered diamond, and conductive ceramics.

In the second mode, the workpiece is machined in the operation as performed by the design described with respect to Fig. 1. First, the switching devices 12, 15 are switched ON to apply the negative-polarity voltage to the machining gap. After the discharge generated by the negative-polarity voltage has been detected by the discharge detection means 52, the switching devices 12, 15 are switched OFF. If the switching devices 12, 15 are switched OFF, the negative direct current arc current persists for an extremely short period of time until the electrostatic energy accumulated in the electrostatic capacity 51 of the machining gap is discharged. By switching ON the switching device 18 before this current is cut off, the positive-polarity large current flows in the machining gap, whereby the machining progresses.

The negative-polarity current and positive-polarity current are supplied consecutively, and the switching device 18 is switched OFF after a predetermined period of time to bring the operation to a stop. After time T2 has elapsed in the stop state, the cycle is repeated to carry out machining. Providing high machining speed as described above, this mode is especially suitable for the machining of iron-based materials.

It will be apparent that the workpiece being machined can be prevented from being subjected to electrolytic corrosion in either of these two modes because these modes are preset or controlled to offset the positive-polarity voltage and the negative-polarity voltage during machining (zero the sum on the average).

While so far only the start of the positive-polarity large current when the discharge took place due to either of the positive-polarity voltage and negative-polarity voltage, the large current may be supplied after both discharges due to the positive-polarity voltage and negative-polarity voltage have occurred, as shown in Figs. 5 (a) and 5(b), to improve the machining speed and prevent electrolytic corrosion.

Also, by providing extremely short, irreducible minimum stop time of approximately 0.5 to 2 sec required to shut off the direct current arc due to the positive-polarity voltage or negative-polarity voltage when the discharge is generated by the positive-polarity voltage or negative-polarity voltage, the persistence of the direct current arc due to the positive polarity voltage or negative-polarity voltage can be prevented, ensuring more stable machining.

It will be apparent that the invention achieves a control method for an electrical discharge machine which prevents a discharge from occurring at the application of a negative-polarity voltage in machining wherein a zero average voltage is maintained and which allows a discharge, if any has occurred, to be completely eliminated immediately, whereby the machined surfaces of a workpiece can be prevented from being reduced in quality due to the discharge taking place in a negative-polarity voltage application state.

It will also be apparent that the invention achieves a control method for an electrical discharge machine which, in addition allows the average voltage between the electrode and the workpiece to be easily controlled to be a predetermined preset voltage.

## Claims

1. Method of controlling the operation of an electrical discharge machine (EDM) having an electrode (1) opposed to a workpiece (2) a predetermined distance away therefrom and defining a gap, where an electrostatic capacity (51) exists in said gap, comprising the steps:
a) applying a first direct current voltage (E₁) having a first polarity across said gap during a first period of time (T₁);
b) applying a second direct current voltage (-E_{C}), which has a second polarity, opposite to said polarity of said first voltage, across said gap during a second period of time;
c) detecting the discharge of a second polarity current from said electrostatic capacity (51) in said gap; and
d) applying a first polarity current (I_{P}) in said gap before said second polarity current is cut off, whereby said current flowing between said electrode (1) and said workpiece (2) during said second period of time is a predetermined value.

2. Method according to claim 1, characterized in that said first voltage is a positive voltage (E₁) and said second voltage is a negative voltage (-E_{C}).

3. Method according to claim 1 or 2, characterized in that it further comprises the step of repeating said first and second periods of time in a predetermined cycle and wherein said predetermined value is approximately zero.

4. Method according to one of the claims 1 to 3, characterized in that it further comprises the step of presetting said first and second periods of time and repeating said periods within a cycle having a predetermined sequence so that said positive and negative polarity voltages (E₁, -E_{C}) during machining average approximately to zero.

5. Method according to one of the claims 1 to 4, characterized in that it further comprises the step of periodically returning said first voltage (E₁) towards a third voltage which is smaller in magnitude than said first voltage during said first period of time (T₁).

6. Method according to one of the claims 1 to 5, characterized in that it further comprises the step of detecting said average voltage during machining and the step of controlling at least said first period of time so that said average voltage may be a predetermined value.

7. Method according to one of the claims 1 to 6, characterized in that said magnitude of said first voltage (E₁) is approximately twice that of said negative voltage (-E_{C}).

8. Method according to claim 7, characterized in that said value of said first positive voltage is approximately 140 to 160 V and that said value of the negative voltage (-E_{C}) is approximately -70 to -80 V.

9. Method according to one of the claims 1 to 8, characterized in that it further comprises the step of providing a positive polarity current while a discharge takes place due to said positive polarity voltage (E₁).

10. Method according to one of the claims 1 to 9, characterized in that it further comprises the step of providing an offset current after a discharge takes place due to said positive polarity voltage (E₁).

11. Method according to one of the claims 1 to 10, characterized in that said different polarity voltages (E₁, -E_{c}) are turned on and off by switching the semiconductor switching devices (12, 15).

12. Method according to claim 11, characterized in that after said semiconductor switching devices (12, 15) are switched off, a negative direct current arc current exists for an extremely short period of approximately several ten to several hundreds microseconds.

13. Method according to claim 12, characterized in that by switching on a switching device (18) before said negative direct current arc current is cut off a large positive polarity current (Iₚ) flows in the machining gap.

## Patentansprüche

1. Verfahren zum Steuern des Betriebs einer Funkenerosionsmaschine (EDM) mit einer Elektrode (1), die einer dem Werkstück (2) mit festgelegter Distanz hiervon gegenüberliegt und einen Bearbeitungszwischenraum definiert, derart, daß eine elektrostatische Kapazität (51) bei dem Bearbeitungszwischenraum existiert, enthaltend die Schritte:
a) Anlegen einer ersten Gleichspannung (E₁) mit einer ersten Polarität parallel zu dem Zwischenraum während einer ersten Zeitperiode (T₁);
b) Anlegen einer zweiten Gleichspannung (-E_{c}) mit zweiter Polarität entgegengesetzt zu der Polarität der ersten Spannung parallel zu dem Bearbeitungszwischenraum während einer zweiten Zeitperiode;
c) Detektieren der Entladung eines Stroms der zweiten Polarität von der elektrostatischen Kapazität (51) im Bearbeitungszwischenraum, und
d) Zuführen eines Stroms erster Polarität (Iₚ) zu dem Bearbeitungszwischenraum vor dem Abtrennen des Stroms der zweiten Polarität, wodurch der zwischen der Elektrode (1) und dem Werkstück (2) während der zweiten Periode fließende Strom einen festgelegten Wert aufweist.

2. Verfahren nach Anspruch 1, dadurch gekennzeichnet, daß die erste Spannung eine positive Spannung (E₁) und die zweite Spannung eine negative Spannung (-E_{c}) ist.

3. Verfahren nach Anspruch 1 oder 2, dadurch gekennzeichnet, daß es ferner den Schritt zum Wiederholen der ersten und zweiten Zeitperiode mit einem festgelegten Zyklus enthält, derart, daß der vorgegebene Wert näherungsweise zu Null wird.

4. Verfahren nach einem der Ansprüche 1 bis 3, dadurch gekennzeichnet, daß es ferner den Schritt zum Vorgeben der ersten und zweiten Zeitperioden enthält, sowie zum Wiederholen dieser Perioden in einem Zyklus mit festgelegter Folge derart, daß die Spannungen (E₁, -E_{c}) positiver und negativer Polarität während der Bearbeitung einen Durchschnitt von näherungsweise Null aufweisen.

5. Verfahren nach einem der Ansprüche 1 bis 4, dadurch gekennzeichnet, daß es ferner den Schritt zum periodischen Rückführen der ersten Spannung (E₁) zu einer dritten Spannung enthält, die im Hinblick auf die Amplitude kleiner als die erste Spannung ist, während der ersten Zeitperiode (T₁).

6. Verfahren nach einem der Ansprüche 1 bis 5, dadurch gekennzeichnet, daß es ferner den Schritt zum Detektieren der Durchschnittsspannung während der Bearbeitung enthält, sowie den Schritt zum Steuern zumindest der ersten Zeitperiode derart, daß die Durchschnittsspannung einen festgelegten Wert annimmt.

7. Verfahren nach einem der Ansprüche 1 bis 6, dadurch gekennzeichnet, daß die Amplitude der ersten Spannung (E₁) näherungsweise das Doppelte derjenigen der negativen Spannung (-E_{c}) ist.

8. Verfahren nach Anspruch 7, dadurch gekennzeichnet, daß der Wert der ersten positiven Spannung näherungsweise 140 bis 160 V beträgt und daß der Wert der negativen Spannung (-E_{c}) näherungsweise -70 bis -80 V beträgt.

9. Verfahren nach einem der Ansprüche 1 bis 8, dadurch gekennzeichnet, daß es ferner den Schritt zum Ausbilden eines Stroms positiver Polarität enthält, während eine Entladung aufgrund der Spannung positiver Polarität (E₁) stattfindet.

10. Verfahren nach einem der Ansprüche 1 bis 9, dadurch gekennzeichnet, daß es ferner den Schritt zum Ausbilden eines Ersatzstroms enthält, nachdem eine Entladung aufgrund der Spannung positiver Polarität (E₁) auftritt.

11. Verfahren nach einem der Ansprüche 1 bis 10, dadurch gekennzeichnet, daß die Spannungen unterschiedlicher Polarität (E₁, -E_{c}) durch Schalten der Halbleiterumschalteinrichtungen (12, 15) an- und abgeschaltet werden.

12. Verfahren nach Anspruch 11, dadurch gekennzeichnet, daß nach dem Abschalten der Halbleiterumschalteinrichtung (12, 15) ein negativer Gleichstrombogen Strom während einer außerordentlich kurzen Periode von näherungsweise mehreren zehn bis mehreren hundert Mikrosekunden existiert.

13. Verfahren nach Anspruch 12, dadurch gekennzeichnet, daß durch Anschalten der Umschalteinrichtung (18) vor dem Abtrennen des negativen Gleichstrom-Bogenstroms ein großer Strom positiver Polarität (Iₚ) in dem Bearbeitungszwischenraum fließt.

## Revendications

1. Procédé de commande du fonctionnement d'une machine d'usinage par étincelage (EDM) ayant une électrode (1) opposée à une pièce (2) située à une distance prédéterminée de celle-ci et définissant un interstice, où il existe une capacité électrostatique (51) dans ledit interstice, comprenant les étapes consistant à :
a) appliquer une première tension en courant continu (E₁) ayant une première polarité entre ledit interstice pendant un laps de temps (T₁) ;
b) appliquer une seconde tension en courant continu (-E_{c}), qui présente une seconde polarité, opposée à ladite polarité de ladite première tension, entre ledit interstice lors d'un second laps de temps ;
c) détecter la décharge d'un courant de la seconde polarité dudit condensateur électrostatique (51) dans ledit interstice ; et
d) appliquer un courant de la première polarité (Iₚ) dans ledit interstice avant la coupure dudit courant de la seconde polarité, d'où il résulte que le courant circulant entre ladite électrode (1) et ladite pièce (2) pendant ledit second laps de temps a une valeur prédéterminée.

2. Procédé selon la revendication 1, caractérisé en ce que ladite première tension est une tension positive (E₁) et ladite seconde tension est une tension négative (-E_{c}).

3. Procédé selon la revendication 1 ou 2, caractérisé en ce qu'il comprend en outre l'étape consistant à répéter lesdits premier et second laps de temps dans un cycle prédéterminé, et dans laquelle ladite valeur prédéterminée est approximativement nulle.

4. Procédé selon l'une des revendications 1 à 3, caractérisé en ce qu'il comprend en outre l'étape consistant à pré-établir lesdits premier et second laps de temps et à répéter lesdits laps de temps dans un cycle ayant une séquence prédéterminée de sorte que lesdites tensions de polarité positives et négatives (E₁, -E_{c}) pendant l'usinage ont une moyenne approximativement nulle.

5. Procédé selon l'une des revendications 1 à 4, caractérisé en ce qu'il comprend en outre l'étape consistant à ramener périodiquement ladite première tension (E₁) vers une troisième tension d'une valeur inférieure à ladite première tension pendant ledit premier laps de temps (T₁).

6. Procédé selon l'une des revendications 1 à 5, caractérisé en ce qu'il comprend en outre l'étape consistant à détecter ladite tension moyenne pendant l'usinage et l'étape consistant à commander au moins ledit au moins premier laps de temps de façon que ladite tension moyenne puisse être une valeur prédéterminée.

7. Procédé selon l'une des revendications 1 à 6, caractérisé en ce e ladite valeur de ladite première tension (E₁) est approximativement le double de celle de ladite tension négative (-E_{c}).

8. Procédé selon la revendication 7, caractérisé en ce que ladite valeur de ladite première tension positive est approximativement 140 à 160 V et en ce que ladite valeur de la tension négative (-E_{c}) est approximativement -70 à -80 V.

9. Procédé selon l'une des revendications 1 à 8, caractérisé en ce qu'il comprend en outre l'étape consistant à fournir un courant de polarité positive alors qu'il se produit une décharge due à ladite tension de la polarité positive (E₁).

10. Procédé selon l'une des revendications 1 à 9, caractérisé en ce qu'il comprend en outre l'étape consistant à fournir un courant de décalage après qu'ait lieu une décharge due à ladite tension de la polarité positive (E₁).

11. Procédé selon l'une des revendications 1 à 10, caractérisé en ce que lesdites tensions de polarités différentes (E₁, - E_{c}) sont appliquées et non-appliquées par commutation des dispositifs de commutation à semi-conducteur (12, 15).

12. Procédé selon la revendication 11, caractérisé en ce qu'après le passage à l'état non conducteur desdits dispositifs de commutation à semi-conducteur (12, 15), il existe un courant d'arc à courant continu négatif pendant une période extrêmement courte d'environ plusieurs dizaines à plusieurs centaines de microsecondes.

13. Procédé selon la revendication 12, caractérisé en ce qu'en rendant passant un dispositif de commutation (18) avant la coupure dudit courant d'arc à courant continu négatif, un courant intense de polarité positive (Iₚ) circule dans l'interstice d'usinage.
